# EUROPÄISCHE PATENTSCHRIFT

(11) **EP 3 781 532 B1**
(45) Veröffentlichungstag und Bekanntmachung des Hinweises auf die Patenterteilung: **05.03.2025**
(21) Anmeldenummer: 19719212.3
(22) Anmeldetag: 15.04.2019
(51) Int. Cl.: C04B 2/06, C04B 20/02

(54) **HYDROTHERMALE BEHANDLUNG VON DOLOMIT-/KALKSTEINSTÄUBEN UND -MEHLEN MIT DAMPF IN EINEM AUTOKLAVEN**
HYDROTHERMAL TREATMENT OF DOLOMITE/LIMESTONE DUSTS AND POWDERS WITH STEAM IN AN AUTOCLAVE
TRAITEMENT HYDROTHERMIQUE DES POUSSIÈRES ET DES POUDRES DE DOLOMITE/DE CALCAIRE À LA VAPEUR DANS UN AUTOCLAVE

(30) Priorität: 16.04.2018 EP 18167488
(43) Veröffentlichungstag der Anmeldung: 24.02.2021
(73) Patentinhaber: Lhoist Recherche et Développement S.A., 1342 Ottignies-Louvain-la-Neuve (BE)
(72) Erfinder: GUENTHER, Theodor H., 49545 Tecklenburg-Brochterbeck (DE); MÜCKE, Frank, 94348 Atting (DE); OEINCK, Hermann, 42327 Wuppertal (DE); PETER, Ulrike, 1070 Watermael-Boitsfort (BE)
(74) Vertreter: Cohausz & Florack
(86) Internationale Anmeldenummer: PCT/EP2019/059666
(87) Internationale Veröffentlichungsnummer: WO 2019/201853

(56) Entgegenhaltungen:
- WO-A1-2016/112456
- DE-A1- 1 571 323
- US-A- 4 407 677
- US-A1- 2009 283 016

## Beschreibung

Die Erfindung betrifft ein Verfahren zum Behandeln von Gesteinsmischungen.

Beim Brennen von Gesteinsmischungen wie Rohdolomit oder Kalk wird Magnesiumcarbonat und/oder Calciumcarbonat in das jeweilige Oxid überführt. Die Magnesiumoxide und/oder Calciumoxide reagieren anschließend in einem Löschschritt mit Wasser zu den jeweiligen Hydroxidverbindungen. Für das Löschen der gebrannten Gesteinsmischungen ist eine Vielzahl an Methoden entwickelt worden.

Allerdings fallen beim Brennen der Gesteinsmischungen, insbesondere beim Brennen in Drehrohröfen, Filterstäube an, die neben Magnesiumcarbonat- und/oder Calciumcarbonat-Partikeln einen hohen Anteil an überbrannten bzw. gesinterten Magnesiumoxid- und/oder Calciumoxid-Partikeln aufweisen. Überbrannte bzw. gesinterte Magnesiumoxid- und/oder Calciumoxid-Partikel dieser Gesteinsmischungen zeichnen sich dadurch aus, dass sie beim Brennverfahren besonders hohen Temperaturen ausgesetzt waren, wodurch sich durch das Sintern oder Schmelzen von Bestandteilen der Gesteinsmischungen die Gefüge der Magnesiumoxid- und/oder Calciumoxid-Partikel stark verdichten. Diese Verdichtungen sorgen dafür, dass überbrannte bzw. gesinterte Magnesiumoxid- und/oder Calciumoxid-Partikel längere Reaktionszeiten aufweisen oder gar unreaktiv gegenüber Wasser sind.

Filterstäube, die Gesteinsmischungen mit einem hohen Anteil an überbrannten bzw. gesinterten Magnesiumoxid- und/oder Calciumoxid-Partikeln enthalten, können mit den bisherigen Hydratationsverfahren zum Löschen von gebrannten Gesteinsmischungen nicht gelöscht werden, da sie eine zu geringe Reaktivität gegenüber Wasser aufweisen. Mit allen derzeit verfügbaren Löschverfahren bleiben immer bedeutende Mengen an nicht gelöschten Magnesiumoxid- und/oder Calciumoxid-Partikeln bestehen.

Die nicht gelöschten Bestandteile der Gesteinsmischungen können bei der Verwendung von Filterstäuben in der Bauindustrie erhebliche Probleme hervorrufen. Da in den Filterstäuben noch beträchtlichen Mengen an nicht abreagierten Magnesiumoxid- und/oder Calciumoxid-Partikeln enthalten sind, können diese über den Zeitraum von Jahren langsam mit dem Wasser in der Atmosphäre reagieren. Durch diese Reaktion quellen die Filterstaubpartikel im Baumaterial auf, was zu Rissen und Schwachstellen im Material führt. Im schlimmsten Fall können solche Risse zum Zusammenbruch von Wänden führen. Konsequenterweise werden Filterstäube aus Brennverfahren nicht in der Bauindustrie eingesetzt und stattdessen entsorgt bzw. deponiert.

Ein Verfahren, durch das auch Gesteinsmischungen mit überbrannten bzw. gesinterten Magnesiumoxid- und/oder Calciumoxid-Partikeln zuverlässig und effizient gelöscht werden könnten, würde den Einsatz von gelöschten Filterstäuben als Baustoffe in der Bauindustrie ermöglichen.

Wenn hier oder an anderer Stelle von überbrannten bzw. gesinterten Magnesiumoxid- und/oder Calciumoxid-Partikeln die Rede ist, sind damit auch Calciumoxidmagnesiumoxidpartikel gemeint.

Die derzeit gängigen Verfahren zum Löschen von gebrannten Gesteinsmischungen umfassend Magnesiumoxid und/oder Calciumoxid genügen diesen Anforderungen nicht.

In der DE 1 571 323 A1 wird ein Verfahren zum Löschen von dolomitischem Kalk mit flüssigem Wasser unter Druck in einem Autoklaven beschrieben. Hierbei ist allerdings die Herstellung von totgebrannten, feuerfesten Massen das Ziel des Verfahrens, die anschließend aus den Hydroxid-Verbindungen durch Sintern erhalten werden. Das Verfahren ist somit nicht auf das Löschen von Filterstäuben mit einem hohen Anteil an überbrannten bzw. gesinterten Magnesiumoxid- und/oder Calciumoxid-Partikeln gerichtet.

Die FR 2 692 253 A1 beschäftigt sich mit dem Problem der unvollständigen Hydratation von Schwefel- und Kalk-haltiger Asche. In einem kontinuierlichen Verfahren wird die Asche mit kaltem Wasser bei unter 50 °C vermischt und reagiert anschließend in einem Autoklaven mit Wasser bei Temperaturen von 110-170 °C für 20-40 Minuten. Das Hydratationsverfahren aus der FR 2 692 253 A1 zielt nicht auf das Löschen von Gesteinsmischungen mit überbrannten bzw. gesinterten Magnesiumoxid- und/oder Calciumoxid-Partikeln ab.

Die US 2009/283016 A1 beschreibt ein Verfahren zur Behandlung von Zementofenstaub mit einem Hydratationsschritt, einem Dehydratationschritt und einem Carbonisierungsschritt mit CO2-Gas in einem Flüssigbettreaktor.

Die US 4 407 677 beschreibt eine Zusammensetzung zur Herstellung eines Zementblocks enthaltend Aggregat, Zement und Zementofenstaub.

Keines der im Stand der Technik beschriebenen Hydratationsverfahren bietet eine Lösung für das Löschen von Gesteinsmischungen umfassend Magnesiumoxid und/oder Calciumoxid, die einen hohen überbrannten bzw. gesinterten Anteil aufweisen, wie beispielsweise Filterstäube.

Die vorliegende Erfindung stellt sich somit die Aufgabe, ein Verfahren zum Behandeln einer Gesteinsmischung umfassend Magnesiumoxid und/oder Calciumoxid bereitzustellen. Insbesondere stellt sich die Erfindung die Aufgabe, ein Verfahren zum Behandeln einer Gesteinsmischung mit einem hohen Anteil an überbrannten bzw. gesinterten Magnesiumoxid- und/oder Calciumoxid-Partikeln bereitzustellen.

Ferner stellt sich die Erfindung zur Aufgabe, ein Verfahren zum Behandeln von Filterstäuben bereitzustellen.

Die Erfindung stellt sich außerdem zur Aufgabe, durch das Behandeln der Gesteinsmischung umfassend einen hohen Anteil an überbrannten bzw. gesinterten Magnesiumoxid- und/oder Calciumoxid-Partikeln, die Verwendung von Filterstaub als Füllstoff in der Bauindustrie zu ermöglichen.

Diese Aufgaben werden durch das in Anspruch 1 beschriebene Verfahren erfüllt.

Vorteilhafte Ausgestaltungen der Erfindung sind in den abhängigen Ansprüchen angegeben und werden nachfolgend wie der allgemeine Erfindungsgedanke im Einzelnen erläutert.

Das erfindungsgemäße Verfahren zur Behandlung einer Gesteinsmischung umfassend mindestens Magnesiumoxid und/oder Calciumoxid ist dadurch gekennzeichnet, dass die Gesteinsmischung mit Wasserdampf bei einem Druck von größer 1,01 bar behandelt wird. Gemäß einer bevorzugten Ausführungsform der Erfindung handelt es sich bei dem Wasserdampf um gespannten Wasserdampf.

Überraschenderweise hat sich herausgestellt, dass die Behandlung einer Gesteinsmischung umfassend mindestens Magnesiumoxid und/oder Calciumoxid mit Wasserdampf, insbesondere mit gespanntem Wasserdampf, bei einem Druck von größer 1,01 bar es ermöglicht, dass die Gesteinsmischung umfassend mindestens Magnesiumoxid und/oder Calciumoxid mit einem hohen Anteil an überbrannten bzw. gesinterten Gesteinspartikeln zu einem Anteil von mindestens > 80%, insbesondere zu einem Anteil von mindestens > 90%, in die entsprechenden Magnesium- und/oder Calcium-Hydroxidverbindungen überführt werden können.

Ohne sich auf eine bestimmte wissenschaftliche Theorie festlegen zu wollen, scheint Wasserdampf, insbesondere gespannter Wasserdampf, der bei einem Druck von größer 1,01 bar in einen Reaktor gepresst wird, in der Lage zu sein, in die gesinterten bzw. überbrannten Gesteinspartikel hineinzudiffundieren oder die Gesteinspartikel aufzubrechen, um so mit den innen liegenden Magnesiumoxid- und/oder Calciumoxid-Bestandteilen abzureagieren. So gelingt es dem Wasserdampf, die ansonsten aufgrund der starken Verdichtung wenig reaktiven überbrannten bzw. gesinterten Gesteinspartikel zur Reaktion mit dem Wasserdampf zu bringen. Experimentelle Studien haben gezeigt, dass für das erfolgreiche Abreagieren der Gesteinsmischungen umfassend mindestens Magnesiumoxid und/oder Calciumoxid mit einem hohen überbrannten bzw. gesinterten Anteil, der Wasserdampf, insbesondere der gespannte Wasserdampf, bereits vor dem Eintritt in den Reaktor generiert werden muss. Der Wasserdampf, insbesondere der gespannte Wasserdampf, wird dann bei einem Überdruck in einen Reaktor gepresst und reagiert dort bei einem Druck von größer 1,01 bar mit der Gesteinsmischung ab.

Der Einsatz des Wasserdampfs, insbesondere des gespannten Wasserdampfs, zur Umsetzung der Gesteinsmischung umfassend mindestens Magnesiumoxid und/oder Calciumoxid hat ferner gegenüber anderen Hydratationsverfahren den Vorteil, dass das Einleiten von Wasserdampf, insbesondere gespanntem Wasserdampf, für eine bessere Steuerbarkeit der Reaktion sorgt. Die eingesetzte Feuchtigkeit kann besser kontrolliert werden und die Verfahrensökonomie verbessert sich, da weniger Masse zu bewegen ist, insbesondere im Vergleich zu Hydratationsverfahren die flüssiges Wasser einsetzen.

Wenn hier oder an anderer Stelle von gespanntem Wasserdampf die Rede ist, ist damit Wasserdampf gemeint, der bei einer Temperatur und einem Druck entsprechend der Sattdampfkurve von Wasser vorliegt. Gespannter Wasserdampf wird dadurch erhalten, dass Wasser zum Siedepunkt erhitzt wird und anschließend um den Betrag der Verdampfungswärme weiter erhitzt wird. In Abhängigkeit des Drucks verschiebt sich die Siedetemperatur des Wassers, so dass bei höherem Druck eine höhere Temperatur gewählt werden muss, um gespannten Wasserdampf zu erhalten.

Der spezifische Temperatur-Druck-Zusammenhang von Sattdampf wird auch in folgender Tabelle festgehalten, wobei T die Temperatur in °C und p der Druck in bar ist:

| T [°C] | p [bar] |
|---|---|
| 100 | 1.01 |
| 110 | 1.04 |
| 120 | 1.98 |
| 130 | 2.70 |
| 140 | 3.61 |
| 150 | 4.76 |
| 160 | 6.18 |
| 170 | 7.91 |
| 180 | 10.02 |
| 190 | 12.54 |
| 200 | 15.54 |
| 210 | 19.06 |
| 220 | 23.18 |
| 230 | 27.95 |
| 240 | 33.45 |
| 250 | 39.74 |
| 260 | 46.90 |
| 270 | 55.00 |
| 280 | 64.13 |
| 290 | 74.38 |
| 300 | 85.84 |

Abweichungen des exakten Temperatur-Druck-Gleichgewichts des Sattdampfs in Höhe von in etwa ± 2 °C sind erfindungsgemäß für gespannten Wasserdampf akzeptabel.

Das erfindungsgemäße Verfahren umfasst gemäß einer bevorzugten Ausführungsform der Erfindung mindestens folgende Schritte:
a. Einbringen der Gesteinsmischung in einen Autoklaven;
b. Einbringen von Wasserdampf, insbesondere gespanntem Wasserdampf, in den Autoklaven;
c. Behandeln der Gesteinsmischung mit dem Wasserdampf, insbesondere gespanntem Wasserdampf, bei einem Druck von größer 1,01 bar.

Durch diese Verfahrensschritte wird gewährleistet, dass die Gesteinsmischung bei einem Druck von größer 1,01 bar mit Wasserdampf, insbesondere gespanntem Wasserdampf, zur Reaktion gebracht wird, der bereits zuvor generiert wurde.

Der Einsatz eines Autoklaven als Reaktor für die Umsetzung der Gesteinsmischung umfassend mindestens Magnesiumoxid und/oder Calciumoxid ermöglicht die effiziente Umsetzung überbrannter bzw. gesinterter Gesteinspartikel.

Wenn hier oder an anderer Stelle von einem Autoklaven die Rede ist, ist damit ein im Wesentlichen gasdicht verschließbarer Druckbehälter gemeint. Der Autoklav eignet sich für die thermische Behandlung von Stoffen im Überdruckbereich. Üblicherweise umfasst ein Autoklav gemäß der Erfindung ein Druckventil, insbesondere ein Druckbegrenzungsventil bzw. ein Überdruckventil. Durch ein solches Druckventil wird der Autoklav gegen zu hohe Drücke abgesichert, so dass Schäden am Autoklaven vermieden werden. Autoklaven, die üblicherweise für das Aushärten von Kalksandsteinen genutzt werden, eignen sich beispielsweise sehr gut als Reaktoren für das erfindungsgemäße Verfahren.

Die Temperatur des Wasserdampfs, insbesondere des gespannten Wasserdampfs, bei Eintritt in den Autoklaven ist von großer Bedeutung für die effiziente Umsetzung des überbrannten bzw. gesinterten Anteils der Gesteinsmischung umfassend Magnesiumoxid und/oder Calciumoxid. Gemäß einer bevorzugten Ausführungsform der Erfindung weist der Wasserdampf, insbesondere der gespannte Wasserdampf, beim Eintritt in den Autoklaven mindestens eine Temperatur von 120 °C auf. Vorzugsweise weist der Wasserdampf, insbesondere der gespannte Wasserdampf, beim Eintritt in den Autoklaven eine Temperatur von 120 °C bis 220 °C, weiter bevorzugt von 140 °C bis 210 °C, besonders bevorzugt von 160 °C bis 200 °C, auf.

Neben der Temperatur des Wasserdampfs ist auch der Dampfdruck des Wasserdampfs bei Eintritt in den Autoklaven bedeutsam. Dampfdruck und Temperatur des Wasserdampfs müssen für gespannten Wasserdampf entsprechend der Sattdampfkurve aufeinander abgestimmt sein. Gemäß einer bevorzugten Ausführungsform der Erfindung weist der Wasserdampf, insbesondere der gespannte Wasserdampf, beim Eintritt in den Autoklaven einen Dampfdruck von 2 bis 25 bar, vorzugsweise von 5 bis 20 bar, weiter bevorzugt von 10 bis 18 bar und besonders bevorzugt von 12 bis 16 bar, auf.

Gemäß einer bevorzugten Ausführungsform des erfindungsgemäßen Verfahrens erfährt die Gesteinsmischung während der Behandlung mit Wasserdampf, insbesondere mit gespanntem Wasserdampf, im Wesentlichen keine zusätzliche Wärmeeinwirkung durch eine externe Wärmequelle. Es ist somit keine weitere Wärmequelle erforderlich, um eine effiziente und vollständige Löschung der Gesteinsmischung sicherzustellen.

Eine Besonderheit des erfindungsgemäßen Verfahrens ist das effiziente Löschen von Gesteinsmischungen umfassend Magnesiumoxid und/oder Calciumoxid, die einen hohen Anteil an überbrannten bzw. gesinterten Magnesiumoxid- und/oder Calciumoxid-Partikeln aufweisen.

Wenn hier oder an anderer Stelle zwischen normalen und überbrannten bzw. gesinterten Anteilen der Gesteinsmischung umfassend Magnesiumoxid und/oder Calciumoxid unterschieden wird, so geht es bei dieser Unterscheidung um die Reaktivität der Magnesiumoxid- und/oder Calciumoxid-partikel mit Wasser. Die normal gebrannten Anteile sind gegenüber Wasser deutlich reaktiver als die überbrannten bzw. gesinterten Anteile. Ein geeignetes Verfahren zum Messen der Reaktionsfähigkeit von Calciumoxid mit Wasser ist in DIN EN 459-2:2010-12 unter Abschnitt 6.4.4 (*"Für ungelöschten Kalk, Kalkteig, Dolomitkalk und Dolomitkalkhydrat"*) beschrieben. Das Verfahren kann analog für Gesteinsmischungen mit Magnesiumoxid angewandt werden. Im Zuge des in Abschnitt 6.4.4 der Norm DIN EN 459-2:2010-12 beschriebenen Verfahrens wird ein Kuchen aus Kalk, Kalkteig, Dolomitkalk oder Dolomitkalkhydrat hergestellt, indem ein Brei des Materials auf Saugplatten gebracht und anschließend auf trockenen Platten in einen Wärmeschrank gestellt wird. Nach der Behandlung werden die Kuchen auf Treibrisse geprüft.

Die überbrannten bzw. gesinterten Magnesiumoxid- und/oder Calciumoxid-Partikel in der Gesteinsmischung gemäß dem erfindungsgemäßen Verfahren zeichnen sich dadurch aus, dass aus den Partikeln gemäß der Norm DIN EN 459-2:2010-12, Abschnitt 6.4.4. hergestellte Kuchen die Prüfung der Norm DIN EN 459-2:2010-12, Abschnitt 6.4.4 nicht bestehen.

Die normal gebrannten Magnesiumoxid- und/oder Calciumoxid-Partikel in der Gesteinsmischung zeichnen sich dadurch aus, dass aus den Partikeln gemäß der Norm DIN EN 459-2:2010-12, Abschnitt 6.4.4. hergestellte Kuchen die Prüfung der Norm DIN EN 459-2:2010-12, Abschnitt 6.4.4 bestehen. Zu der Gruppe normal gebrannter Gesteinsmischungen gemäß dem erfindungsgemäßen Verfahren gehören beispielsweise Weich-, Mittel- und Hartbranntkalk.

Gesteinsmischungen, die im erfindungsgemäßen Verfahren eingesetzt werden, weisen einen Anteil an Magnesiumoxid- und/oder Calciumoxid-Partikeln, die eine Prüfung gemäß DIN EN 459-2:2010-12, Abschnitt 6.4.4 nicht bestehen, von 0,1 bis 20 Gew.%, insbesondere von 1 bis 15 Gew.%, von 2 bis 11 Gew.% oder von 3 bis 8,5 Gew.%, bezogen auf die Gesteinsmischung, auf.

Grundsätzlich können auch Gesteinsmischungen mit einem geringeren oder höheren Anteil an überbrannten bzw. gesinterten Gesteinspartikeln im erfindungsgemäßen Verfahren eingesetzt werden. Das erfindungsgemäße Verfahren eignet sich allerdings besonders für Gesteinsmischungen mit den oben beschriebenen überbrannten bzw. gesinterten Anteilen, da bei diesen Mengenanteilen überbrannte bzw. gesinterte Anteile besonders effizient gelöscht werden. Des Weiteren können Gesteinsmischungen mit diesen Anteilen an überbrannten bzw. gesinterten Gesteinspartikeln nicht durch andere Behandlungsverfahren mit Wasser in die korrespondierenden Hydroxid-Verbindungen überführt werden.

Gemäß einer bevorzugten Ausführungsform werden mit dem erfindungsgemäßen Verfahren Gesteinsmischungen, die aufgrund der gebrannten bzw. gesinterten Anteile in der Gesteinsmischung eine Prüfung nach DIN EN 459-2:2010-12, Abschnitt 6.4.4 vor Durchführung des erfindungsgemäßen Verfahrens nicht bestehen, in Gesteinsmischungen überführt, die eine solche Prüfung nach DIN EN 459-2:2010-12, Abschnitt 6.4.4 bestehen.

Filterstaub, der bei Brennverfahren im Drehrohrofen anfällt, weist üblicherweise überbrannte bzw. gesinterte Anteile im oben beschriebenen Bereich auf. Somit eignet sich das erfindungsgemäße Verfahren besonders gut zum Löschen von Filterstaub, insbesondere Filterstaub, der aus einem Drehrohrofenbrennverfahren erhalten wurde. Gemäß einer bevorzugten Ausführungsform der Erfindung umfasst die Gesteinsmischung einen Filterstaub. Nach einer weiteren bevorzugten Ausführungsform der Erfindung ist die Gesteinsmischung ein Filterstaub.

Neben Magnesiumoxid- und/oder Calciumoxid-Partikeln besitzen Filterstäube häufig große Mengen an Magnesiumcarbonat- und/oder Calciumcarbonat-Partikeln. Die Carbonat-Partikel stören die Behandlung nach dem erfindungsgemäßen Verfahren nicht. Eine im erfindungsgemäßen Verfahren einsetzbare Gesteinsmischung kann zum Großteil aus Magnesiumcarbonat- und/oder Calciumcarbonat-Partikeln bestehen. So enthalten Filterstäube aus Drehrohrofenbrennverfahren für gewöhnlich einen Anteil an Magnesiumcarbonat- und/oder Calciumcarbonat-Partikeln im Bereich von 40 bis 90 Gew.%, insbesondere 60 bis 75 Gew.%, bezogen auf die Gesamtzusammensetzung der Gesteinsmischung. Für das erfindungsgemäße Verfahren eignen sich aber auch Gesteinsmischungen mit weniger oder gar keinen Carbonat-Partikeln.

Das erfindungsgemäße Verfahren eignet sich zum Löschen von Gesteinsmischungen in einem breiten Bereich an möglichen Korngrößen. Gemäß einer Ausführungsform der Erfindung liegen mögliche mittlere Korngrößen bei 100 bis 300 µm, vorzugsweise bei 50 bis 150 µm, besonders bevorzugt bei 90 bis 110 µm. In einer besonders bevorzugten Ausführungsform des erfindungsgemäßen Verfahrens wird Filterstaub mit einer durchschnittlichen mittleren Korngröße von 80 bis 120 µm eingesetzt.

Eine bevorzugte Ausführungsform der Erfindung ist dadurch gekennzeichnet, dass die Gesteinsmischung als Magnesiumoxid und/oder Calciumoxid umfassende Gesteinsmischung mindestens gebrannten Dolomit und/oder gebrannten Kalk umfasst. Gemäß einer weiteren bevorzugten Ausführungsform der Erfindung umfasst die Gesteinsmischung außerdem Dolomit und/oder Kalk.

Als Unterlage für die Behandlung der Gesteinsmischung eignen sich viele unterschiedliche Gegenstände und Produkte. In einer bevorzugten Ausführungsform des erfindungsgemäßen Verfahrens erfolgt die Behandlung der Gesteinsmischung auf einem Blech mit Rand, vorzugsweise auf einem Blech mit Rand und einem Siebboden. Durch eine solche Unterlage wird eine große Oberfläche für den Wasserdampf, insbesondere gespannten Wasserdampf, bereitgestellt und die Löschreaktion erfolgt besonders effizient. Wird ein Blech mit Rand und Siebboden eingesetzt, so kann der Wasserdampf auch über die teiloffene Unterseite der Unterlage an die Gesteinsmischung gelangen und diese dadurch besonders effizient löschen.

Gemäß einer weiteren Ausführungsform der Erfindung quillt die Gesteinsmischung während des Verfahrens mindestens um 10 Vol.%, bevorzugt mindestens um 25 Vol.%, bevorzugter mindestens um 50 Vol.%, am bevorzugtesten mindestens um 100 Vol.%, bezogen auf das Volumen des Gesteins vor dem Löschen, an. Dies geschieht durch die effiziente Aufnahme des Wassers im Zuge der Löschreaktion.

Beim Öffnen des Autoklaven nach Abschluss der Löschreaktion weist die Gesteinsmischung für gewöhnlich noch eine Restfeuchte auf. Gemäß einer Ausführungsform der Erfindung liegt diese Restfeuchte im Bereich von 0 bis 15 Gew.%, vorzugsweise im Bereich von 2 bis 10 Gew.%.

Gemäß einer bevorzugten Ausführungsform des erfindungsgemäßen Verfahrens umfasst das Verfahren im Anschluss an die Behandlung der Gesteinsmischung mit Wasserdampf, insbesondere gespanntem Wasserdampf, noch einen Trocknungsschritt d. Dieser Trocknungsschritt d. dient dazu, die Restfeuchte der Gesteinsmischung abzusenken. Der Trocknungsschritt d. kann vorzugsweise in einem separaten Ofen stattfinden.

Im Anschluss an den optionalen Trocknungsschritt d. weist die Gesteinsmischung vorzugsweise eine Restfeuchte von weniger als 3 Gew.%, weiter bevorzugt von weniger als 2 Gew.%, am bevorzugtesten von weniger als 1 Gew.%, auf. Die Gesteinsmischung ist gemäß einer besonders bevorzugten Ausführungsform der Erfindung nach dem Trocknungsschritt d. vollständig trocken und direkt für mögliche Anwendungsgebiete einsetzbar.

Ein breiter Bereich an Reaktionszeiten ist für die Löschreaktion des erfindungsgemäßen Verfahrens geeignet. Grundsätzlich können kürzere Reaktionszeiten gewählt werden, wenn der überbrannte bzw. gesinterte Anteil an der Gesteinsmischung geringer ist. Im Zuge experimenteller Studien haben sich Reaktionszeiten im Bereich von 20 Minuten bis 30 Stunden als vorteilhaft herausgestellt. Besonders bevorzugt sind Reaktionszeiten im Bereich von 2 Stunden bis 24 Stunden, von 4 bis 12 Stunden oder von 5 Stunden bis 8 Stunden.

Die im Verfahren eingesetzten Gesteinsmischungen können neben Magnesiumoxid und/oder Calciumoxid noch viele weitere Bestandteile enthalten. Besonders geeignet sind Gesteinsmischungen, die neben Magnesiumoxid und/oder Calciumoxid noch Magnesiumcarbonat- und/oder Calciumcarbonat-Partikel enthalten. Magnesiumcarbonat- und/oder Calciumcarbonat-Partikel können auch Hauptbestandteil der Gesteinsmischung sein. Weitere Bestandteile, die in einer für das erfindungsgemäße Verfahren geeigneten Gesteinsmischung enthalten sein können, sind unter anderem ausgewählt aus der Gruppe bestehend aus Calciumsilikaten, Magnesiumsilikaten, Aluminiumoxid, Eisenoxid, Siliziumdioxid, Zementstein, Ton, Sand, Halit (Natriumchlorid), Schwefel, Schwefeltrioxyd, Anhydrit (Calciumsulfat), Mineralien, oder Mischungen davon. Siliziumoxid kann hierbei in Form vieler unterschiedlicher Phasen und Strukturen auftreten, die unter anderem Calcium-, Magnesium- und/oder Aluminium-Bestandteile umfassen, insbesondere Calciumsilikate und/oder Magnesiumsilikate. Auch Aluminiumoxid (Al₂O₃) und Eisenoxid (Fe₂O₃) können in einer Vielzahl unterschiedlicher Phasen und Strukturen vorliegen. So kann Eisenoxid unter anderem in Form von Srebrodolskit oder Iowait vorliegen.

Beschrieben wird ferner die Verwendung einer Gesteinsmischung erhältlich aus dem erfindungsgemäßen Verfahren als Füllstoff. Die aus dem erfindungsgemäßen Verfahren erhältliche Gesteinsmischung kann vielfältig verwendet werden. Bevorzugt sind Verwendungen der Gesteinsmischung als Füllstoff für die Bauindustrie, für die Asphaltindustrie, für zementgebundene Stoffe, für Mörtel, für Fertigputz, für Böden, für Bitumendachbahnen, für Kalksandstein, für Kunststoffe oder für Gummis. Allgemein sind Verwendungen der Gesteinsmischung als Füllstoffe immer dort möglich, in denen üblicherweise Dolomit- und/oder Kalkhydrate Anwendung finden. Es sind auch Verwendungen der Gesteinsmischungen möglich, bei denen die Gesteinsmischung nicht als Füllstoff eingesetzt wird. Auch hier bieten sich besonders solche Anwendungsbereiche an, in denen üblicherweise Dolomit- und/oder Kalkhydrate eingesetzt werden.

Beschrieben wird ferner die Verwendung von gespanntem Wasserdampf für das Löschen von Gesteinsmischungen umfassend Magnesiumoxid und/oder Calciumoxid. Vorzugsweise wird der gespannte Wasserdampf für das Löschen von Gesteinsmischungen umfassend Magnesiumoxid und/oder Calciumoxid gemäß dem erfindungsgemäßen Verfahren verwendet.

Beschrieben wird außerdem ein aus dem erfindungsgemäßen Verfahren erhältlicher Baustoff. Der aus dem erfindungsgemäßen Verfahren erhältliche Baustoff zeichnet sich durch eine hohe Stabilität und Langlebigkeit aus. Der Baustoff reagiert im Wesentlichen auch über lange Zeiträume nicht mit in der Luft enthaltenem Wasser ab. So entstehen in dem Baustoff auch über lange Zeiträume keine Risse. Gemäß einer bevorzugten Ausführungsform der Erfindung zeichnet sich der Baustoff dadurch aus, dass er über das erfindungsgemäße Verfahren aus Feinstaub erhältlich ist.

Die Erfindung wird nachfolgend anhand von Ausführungsbeispielen näher erläutert, die allein dem Verständnis der Erfindung dienen und diese nicht beschränken sollen.

### Beispiel 1

Als Gesteinsmischung wurde ein Filterstaub aus einem Drehrohrofenprozess verwendet.

Die Zusammensetzung der Gesteinsmischung (Gesteinsmischung A1) wurde mittels Röntgenkristallstrukturanalyse (XRD) vor Einsatz im erfindungsgemäßen Verfahren ermittelt (Tabelle 1).

**Tabelle 1: Zusammensetzungen der Gesteinsmischung A1 ermittelt durch Röntgenkristallstrukturanalyse; Mengenangaben in Gew.%**

| Salz | Dolomit | Calcit | Periklas | Brucit | BranntKalk | Anhydrit | Halit | Srebrodolsk it |
|---|---|---|---|---|---|---|---|---|
| Formel | CaMg (CO₃)₂ | CaCO₃ | MgO | Mg(OH)₂ | CaO | CaSO₄ | NaCl | Ca₂FeO₅ |
| A1 | 68,49 | 11,93 | 5,76 | 0,00 | 2,43 | 2,48 | 3,11 | 5,38 |

Anschließend wurde die Gesteinsmischung bei unterschiedlichem Druck und für unterschiedliche Dauer mit gespanntem Wasserdampf behandelt (Tabelle 2):

**Tabelle 2: Reaktionsbedingungen zur Behandlung der Gesteinsmischung A1**

| Experiment nummer | Druck des Wasserdampfs | Temperatur des Wasserdampfs | Dauer des Experiments |
|---|---|---|---|
| B1 | 2 bar | 120 °C | 4h |
| B2 | 4 bar | 143 °C | 4h |
| B3 | 8 bar | 170 °C | 4h |
| B4 | 16 bar | 203 °C | 4h |
| B5 | 2 bar | 120 °C | 12 h |
| B6 | 4 bar | 143 °C | 12 h |
| B7 | 8 bar | 170 °C | 12 h |
| B8 | 16 bar | 203 °C | 12 h |

Die Temperatur des Wasserdampfs war hierbei immer in Abhängigkeit des Drucks so gewählt, dass es sich um gespannten Wasserdampf handelte. Die entsprechenden Druck-Temperatur-Zusammenhänge können der Sattdampfkurve in einem Phasendiagramm von Wasser entnommen werden.

Die Bildung von Brucit (Mg(OH)₂) in der Gesteinsmischung A1 wurde mittels Glühverlustanalyse (Temperaturgradient von 30 bis 950 °C, Verlust bei 436 °C) festgestellt (Tabelle 3):

**Tabelle 3: Bildung von Brucit (Mg(OH)₂) in der Gesteinsmischung nach Behandlung mit gespanntem Wasserdampf nach den in Tabelle 2 genannten Reaktionsbedingungen; Mengenangaben in Gew.%**

| Experiment | Menge an Brucit [Gew.%] |
|---|---|
| A1 | 0,00 |
| B1 | 10,97 |
| B2 | 14,21 |
| B3 | 13,27 |
| B4 | 14,76 |
| B5 | 15,50 |
| B6 | 14,60 |
| B7 | 15,96 |
| B8 | 15,15 |

Wie der Tabelle 3 zu entnehmen ist, eignet sich das erfindungsgemäße Verfahren ausgezeichnet zur effektiven Bildung von Brucit (Mg(OH)₂) selbst aus einem sonst unreaktiven Filterstaub aus einem Drehrohrofenprozess. Die Behandlung der Filterstäube ist grundsätzlich bei höherem Druck effektiver, insbesondere wenn eine Reaktionszeit von 4 Stunden gewählt wird (vgl. Ergebnisse von Beispielen B4 mit B1). Das erfindungsgemäße Verfahren überführt effektiv Magnesiumoxid aus Gesteinsmischungen mit einem hohen Anteil an überbrannten bzw. gesinterten Magnesiumoxid-Partikeln in Magnesiumhydroxid (Brucit).

Es wurde ferner festgestellt, dass sich die physikalischen Eigenschaften der Gesteinsmischung nach der Behandlung mit gespanntem Wasserdampf teils merklich geändert hatten. Die Pulverdichte der Gesteinsmischung war verringert während die spezifische Oberfläche sich vergrößert hatte und die Partikel der Gesteinsmischung feiner vorlagen als vor der Behandlung. All diese physikalischen Veränderungen sind vorteilhaft für die Verwendung der Gesteinsmischung als Füllstoff.

Durch das erfindungsgemäße Verfahren können Oxidbestandteile in Filterstäuben effizient gelöscht werden, so dass nur noch Spuren an Oxiden in den Filterstäuben enthalten bleiben.

### Beispiel 2

Als weiteres Experiment wurde untersucht, welchen Einfluss autoklavierte dolomitische Filterstäube auf die Eigenschaften von Kalksandsteinen haben.

Hierfür wurden drei unterschiedliche Kalksandsteine hergestellt. Der erste Kalksandstein C1 setzte sich zusammen aus Quarzsand, hydratisiertem (hydriertem) Branntkalk und unbehandelten dolomitischen Filterstäuben. Der zweite und dritte Kalksandstein C2 und C3 setzte sich jeweils zusammen aus Quarzsand, hydratisiertem (hydriertem) Branntkalk und gemäß dem erfinderischen Verfahren behandelten dolomitischen Filterstäuben. Der dolomitische Filterstaub war jeweils für 12 Stunden bei 4 bar behandelt worden (siehe Tabelle 3, Reaktionsbedingungen B6).

Die Kalksandsteine wurden auf folgende Weise hergestellt:
Zunächst wurden Quarzsand (in etwa 90 Gew.%) und Bindemittel (dolomitischer Filterstaub und Branntkalk; in etwa 10 Gew.%) mit Wasser vermischt, bis eine Mischfeuchtigkeit von etwa 5% erreicht war. Die feuchte Mischung wurde anschließend über einen Zeitraum von zwei Stunden in einem Trocknungsofen bei 70 °C aufbewahrt, um den Branntkalk zu hydratisieren. Hierbei wurde keine Hydratisierung der dolomitischen Filterstäube beobachtet.

Das Gemisch wurde anschließend in einem zweiten Mixer homogenisiert, gewogen (jeweils 500 g) und dann in einer speziellen Kompressionsform zu einem quaderförmigen Prisma (Länge ca. 160 mm; Breite ca. 40 mm; Höhe ca. 40 mm; Volumen ca. 256 mm³) bei einer Kompressionskraft von 12.000 kg zusammengepresst.

Das daraus erhaltene Prisma wurde anschließend direkt in einen vorgewärmten Autoklaven platziert und mit gespanntem Wasserdampf bei 16 bar (ca. 203 °C) für vier Stunden behandelt. Die physikalischen Eigenschaften des so erhaltenen gehärteten Kalksandstein wurden nach dem Abkühlen über Nacht gemessen (Ergebnisse in Tabelle 4).

**Tabelle 4: Zusammensetzungen und physikalische Eigenschaften der Kalksandsteine C1 bis C3**

| Kalksandstein | **C1** | **C2** | **C3** |
|---|---|---|---|
| Quarzsand [Gew.%] | 92,7 | 92,0 | 82,8 |
| Branntkalk [Gew.%] | 7,3 | 6,4 | 8,7 |
| Unbehandelter Filterstaub [Gew.%] | 0,7 | - | - |
| Behandelter Filterstaub [Gew.%] | - | 1,6 | 9,2 |
| Rohdichte [g/cm³] | 1,75 | 1,87 | 1,85 |
| Biegezugfestigkeit [N/mm²] | 2,8 | 4,0 | 4,1 |
| Druckfestigkeit [N/mm²] | 15,7 | 17,8 | 19,6 |

Der Kalksandstein C1 wies Blasen und Brüche auf, was sich auch in den weniger guten physikalischen Eigenschaften widerspiegelte. Im Gegensatz dazu waren die Kalksandsteine C2 und C3 bruchfrei und wiesen eine gute Biegezugfestigkeit und Druckfestigkeit auf.

Kalksandsteine mit Filterstäuben, die gemäß dem erfindungsgemäßen Verfahren behandelt wurden, weisen gute physikalische Eigenschaften auf. Durch das erfindungsgemäße Verfahren können Filterstäube somit in unterschiedlichen Anwendungen eingesetzt werden und müssen nicht mehr teuer entsorgt werden.

## Patentansprüche

1. Verfahren zum Behandeln einer Gesteinsmischung umfassend mindestens Magnesiumoxid und/oder Calciumoxid, **dadurch gekennzeichnet, dass** die Gesteinsmischung mit Wasserdampf bei einem Druck von größer 1,01 bar behandelt wird, wobei
das Verfahren mindestens folgende Schritte umfasst:
a. Einbringen der Gesteinsmischung in einen Autoklaven;
b. Einbringen von Wasserdampf in den Autoklaven;
c. Behandeln der Gesteinsmischung mit dem Wasserdampf bei einem Druck von größer 1,01 bar,
und wobei die Gesteinsmischung einen Anteil an Magnesiumoxid- und/oder Calciumoxid-Partikeln, die eine Prüfung gemäß DIN EN 459-2:2010-12, Abschnitt 6.4.4 nicht bestehen, von 0,1 bis 20 Gew.% bezogen auf die Gesteinsmischung, aufweist.

2. Verfahren gemäß Anspruch 1, **dadurch gekennzeichnet, dass** es sich bei dem Wasserdampf um gespannten Wasserdampf handelt.

3. Verfahren gemäß einem oder mehreren der vorstehenden Ansprüche, **dadurch gekennzeichnet, dass** der Wasserdampf beim Eintritt in den Autoklaven mindestens eine Temperatur von 120 °C, insbesondere eine Temperatur von 120 °C bis 220 °C, 140 °C bis 210 °C oder von 160 °C bis 200 °C, aufweist.

4. Verfahren gemäß einem oder mehreren der vorstehenden Ansprüche, **dadurch gekennzeichnet, dass** der Anteil an Magnesiumoxid- und/oder Calciumoxid-Partikeln, die eine Prüfung gemäß DIN EN 459-2:2010-12, Abschnitt 6.4.4 nicht bestehen, von 1 bis 15 Gew.%, von 2 bis 11 Gew.% oder von 3 bis 8,5 Gew.%, bezogen auf die Gesteinsmischung, ist.

5. Verfahren gemäß einem oder mehreren der vorstehenden Ansprüche, **dadurch gekennzeichnet, dass** die Gesteinsmischung umfassend mindestens Magnesiumoxid und/oder Calciumoxid ein Filterstaub ist, insbesondere ein Filterstaub aus einem Drehrohrofenprozess.

6. Verfahren gemäß einem oder mehreren der vorstehenden Ansprüche, **dadurch gekennzeichnet, dass** die Gesteinsmischung mindestens gebrannten Dolomit und/oder gebrannten Kalk umfasst.

7. Verfahren gemäß einem oder mehreren der vorstehenden Ansprüche, **dadurch gekennzeichnet, dass** die Gesteinsmischung während des Verfahrens mindestens um 10 Vol.%, insbesondere mindestens um 25 Vol.%, mindestens um 50 Vol.% oder mindestens um 100 Vol.%, aufquillt, bezogen auf das Volumen des Gesteins vor dem Löschen.

8. Verfahren gemäß einem oder mehreren der vorstehenden Ansprüche, **dadurch gekennzeichnet, dass** die Gesteinsmischung nach der Behandlung in Schritt c. eine Restfeuchte von 0 bis 15 Gew.%, insbesondere von 2 bis 10 Gew.%, aufweist.

9. Verfahren gemäß einem oder mehreren der vorstehenden Ansprüche, **dadurch gekennzeichnet, dass** die Gesteinsmischung Calciumsilikate, Magnesiumsilikate, Aluminiumoxid, Eisenoxid, Siliziumdioxid, Zementstein, Ton, Sand, Halit (Natriumchlorid), Schwefel, Schwefeltrioxid, Anhydrit (Calciumsulfat), Mineralien, oder Mischungen davon, enthält.

10. Verfahren gemäß einem oder mehreren der vorstehenden Ansprüche, **dadurch gekennzeichnet, dass** der Wasserdampf beim Eintritt in den Autoklaven einen Dampfdruck von 1,5 bis 25 bar, insbesondere von 2 bis 20 bar, von 4 bis 18 bar, von 6 bis 17 bar oder von 12 bis 16 bar, aufweist.

11. Verfahren gemäß einem oder mehreren der vorstehenden Ansprüche, **dadurch gekennzeichnet, dass** das Verfahren einen Trocknungsschritt d. umfasst.

12. Verfahren gemäß Anspruch 11, **dadurch gekennzeichnet, dass** die Gesteinsmischung nach dem Trocknungsschritt d. eine Restfeuchte von weniger als 3 Gew.%, insbesondere weniger als 2 Gew.% oder weniger als 1 Gew.%, aufweist.

13. Verfahren gemäß einem oder mehreren der vorstehenden Ansprüche, **dadurch gekennzeichnet, dass** die Behandlung der Gesteinsmischung mit Wasserdampf 2 bis 24 Stunden, insbesondere 4 bis 12 Stunden, dauert.

14. Verfahren gemäß einem oder mehreren der vorstehenden Ansprüche, **dadurch gekennzeichnet, dass** die Behandlung der Gesteinsmischung auf einem Blech mit Rand, insbesondere auf einem Blech mit Rand und einem Siebboden, erfolgt.

15. Verfahren gemäß einem oder mehreren der vorstehenden Ansprüche, **dadurch gekennzeichnet, dass** die Gesteinsmischung während der Behandlung mit Wasserdampf im Wesentlichen keine zusätzliche Wärmeeinwirkung durch eine externe Wärmequelle erfährt.

## Claims

1. Method for treating a rock mixture comprising at least magnesium oxide and/or calcium oxide, **characterized in that** the rock mixture is steam treated at a pressure greater than 1.01 bar,
the method comprising at least the following steps:
a. introducing the rock mixture into an autoclave;
b. introducing steam into the autoclave;
c. treatment of the rock mixture with the steam at a pressure greater than 1.01 bar,
and the rock mixture having a proportion of magnesium oxide and/or calcium oxide particles which do not pass a test according to DIN EN 459-2:2010-12, section 6.4.4, of 0.1 to 20 wt.% based on the rock mixture.

2. Method according to claim 1, **characterized in that** the steam is superheated steam.

3. Method according to one or more of the preceding claims,
**characterized in that** the steam entering the autoclave has a temperature of at least 120°C, in particular a temperature of 120°C to 220°C, 140°C to 210°C or 160°C to 200°C.

4. Method according to one or more of the preceding claims,
**characterized in that** the proportion of magnesium oxide and/or calcium oxide particles which do not pass a test according to DIN EN 459-2:2010-12, section 6.4.4, is from 1 to 15 wt.%, from 2 to 11 wt.% or from 3 to 8.5 wt.%, based on the rock mixture.

5. Method according to one or more of the preceding claims,
**characterized in that** the rock mixture comprising at least magnesium oxide and/or calcium oxide is a filter dust, in particular a filter dust from a rotary kiln process.

6. Method according to one or more of the preceding claims,
**characterized in that** the rock mixture comprises at least burnt dolomite and/or burnt lime.

7. Method according to one or more of the preceding claims,
**characterized in that** during the method, the rock mixture swells by at least 10 vol.%, in particular by at least 25 vol.%, by at least 50 vol.% or by at least 100 vol.%, based on the volume of the rock before slaking.

8. Method according to one or more of the preceding claims,
**characterized in that** after the treatment in step c., the rock mixture has a residual moisture content of 0 to 15 wt.%, in particular of 2 to 10 wt.%.

9. Method according to one or more of the preceding claims,
**characterized in that** the rock mixture contains calcium silicates, magnesium silicates, aluminum oxide, iron oxide, silicon dioxide, cement stone, clay, sand, halite (sodium chloride), sulfur, sulfur trioxide, anhydrite (calcium sulfate), minerals, or mixtures thereof.

10. Method according to one or more of the preceding claims,
**characterized in that** the steam entering the autoclave has a steam pressure of 1.5 to 25 bar, in particular 2 to 20 bar, 4 to 18 bar, 6 to 17 bar or 12 to 16 bar.

11. Method according to one or more of the preceding claims,
**characterized in that** the method comprises a drying step d.

12. Method according to claim 11, **characterized in that** after the drying step d., the rock mixture has a residual moisture content of less than 3 wt.%, in particular less than 2 wt.% or less than 1 wt.%.

13. Method according to one or more of the preceding claims,
**characterized in that** the steam treatment of the rock mixture takes 2 to 24 hours, in particular 4 to 12 hours.

14. Method according to one or more of the preceding claims,
**characterized in that** the treatment of the rock mixture takes place on a tray which has a rim, in particular on a tray which has a rim and a sieve base.

15. Method according to one or more of the preceding claims,
**characterized in that** during the steam treatment, the rock mixture undergoes substantially no additional heat exposure from an external heat source.

## Revendications

1. Procédé permettant le traitement d'un mélange de roches comprenant au moins de l'oxyde de magnésium et/ou de l'oxyde de calcium,
**caractérisé en ce que** le mélange de roches est traité avec de la vapeur d'eau à une pression supérieure à 1,01 bar, dans lequel
le procédé comprend au moins les étapes suivantes :
a. introduction du mélange de roches dans un autoclave ;
b. introduction de vapeur d'eau dans l'autoclave ;
c. traitement du mélange de roches avec la vapeur d'eau à une pression supérieure à 1,01 bar,
et dans lequel le mélange de roches présente une proportion de particules d'oxyde de magnésium et/ou d'oxyde de calcium ne satisfaisant pas à un test selon la norme DIN EN 459-2:2010-12, section 6.4.4, allant de 0,1 à 20 % en poids par rapport au mélange de roches.

2. Procédé selon la revendication 1, **caractérisé en ce que** la vapeur d'eau est de la vapeur d'eau sous pression.

3. Procédé selon l'une ou plusieurs des revendications précédentes,
**caractérisé en ce que** la vapeur d'eau, à son entrée dans l'autoclave, présente au moins une température de 120 °C, en particulier une température allant de 120 °C à 220 °C, de 140 °C à 210 °C ou de 160 °C à 200 °C.

4. Procédé selon l'une ou plusieurs des revendications précédentes,
**caractérisé en ce que** la proportion de particules d'oxyde de magnésium et/ou d'oxyde de calcium ne satisfaisant pas à un test selon la norme DIN EN 459-2:2010-12, section 6.4.4, va de 1 à 15 % en poids, de 2 à 11 % en poids ou de 3 à 8,5 % en poids par rapport au mélange de roches.

5. Procédé selon l'une ou plusieurs des revendications précédentes,
**caractérisé en ce que** le mélange de roches comprenant au moins de l'oxyde de magnésium et/ou de l'oxyde de calcium est une poussière retenue par un filtre, en particulier une poussière retenue par un filtre provenant d'un processus de four rotatif.

6. Procédé selon l'une ou plusieurs des revendications précédentes,
**caractérisé en ce que** le mélange de roches comprend au moins de la dolomie calcinée et/ou de la chaux calcinée.

7. Procédé selon l'une ou plusieurs des revendications précédentes,
**caractérisé en ce que** le mélange de roches gonfle pendant le procédé d'au moins 10 % en volume, en particulier d'au moins 25 % en volume, d'au moins 50 % en volume ou d'au moins 100 % en volume, par rapport au volume de la roche avant l'élimination.

8. Procédé selon l'une ou plusieurs des revendications précédentes,
**caractérisé en ce que** le mélange de roches présente, après le traitement de l'étape c., une humidité résiduelle allant de 0 à 15 % en poids, en particulier de 2 à 10 % en poids.

9. Procédé selon l'une ou plusieurs des revendications précédentes,
**caractérisé en ce que** le mélange de roches contient des silicates de calcium, des silicates de magnésium, de l'oxyde d'aluminium, de l'oxyde de fer, du dioxyde de silicium, de la pierre à ciment, de l'argile, du sable, de l'halite (chlorure de sodium), du soufre, du trioxyde de soufre, de l'anhydrite (sulfate de calcium), des minéraux, ou des mélanges de ceux-ci.

10. Procédé selon l'une ou plusieurs des revendications précédentes,
**caractérisé en ce que** la vapeur d'eau présente, à son entrée dans l'autoclave, une pression de vapeur allant de 1,5 à 25 bar, en particulier de 2 à 20 bar, de 4 à 18 bar, de 6 à 17 bar ou de 12 à 16 bar.

11. Procédé selon l'une ou plusieurs des revendications précédentes,
**caractérisé en ce que** le procédé comprend une étape de séchage d.

12. Procédé selon la revendication 11, **caractérisé en ce que** le mélange de roches présente, après l'étape de séchage d., une humidité résiduelle inférieure à 3 % en poids, en particulier inférieure à 2 % en poids ou inférieure à 1 % en poids.

13. Procédé selon l'une ou plusieurs des revendications précédentes,
**caractérisé en ce que** le traitement du mélange de roches avec de la vapeur d'eau dure de 2 à 24 heures, en particulier de 4 à 12 heures.

14. Procédé selon l'une ou plusieurs des revendications précédentes,
**caractérisé en ce que** le traitement du mélange de roches est effectué sur une tôle à rebord, en particulier sur une tôle à rebord et fond perforé.

15. Procédé selon l'une ou plusieurs des revendications précédentes,
**caractérisé en ce que,** pendant le traitement avec de la vapeur d'eau, le mélange de roches ne subit sensiblement aucun effet thermique supplémentaire au moyen d'une source de chaleur externe.
